# EUROPEAN PATENT APPLICATION

(11) **EP 1 548 612 A1**
(43) Date of publication of application: **29.06.2005**
(21) Application number: 03029542.2
(22) Date of filing: 22.12.2003
(51) Int. Cl.: G06F 17/30

(54) **Method and device for providing column statistics for data within a relational database**

(71) Applicant: Software Engineering GmbH, 40470 Düsseldorf (DE)
(72) Inventor: The designation of the inventor has not yet been filed
(74) Representative: Cohausz & Florack

(57) **Abstract**

The invention relates to a method, a computer program and a device for providing column statistics for data within a relational database, in particular a DB2 database, for selecting an access path to said data. To aid the DB2 OPTIMIZER in selecting an optimal access path based on actual frequency statistics, the collection of column statistics may be carried out automatically with the steps of collecting database queries to be executed on the database, parse the database queries to create at least one usage matrix comprising at least usage information of certain statements within the database queries, determining from said usage matrix columns within said database for which said columns statistics are useful, and collect said column statistics for said determined columns.

## Description

### FIELD OF THE INVENTION

The invention relates to a method for providing column statistics for data within a relational database, in particular a DB2 database, in order to select an access path to said data.

The invention also relates to a computer program and a computer program product for providing column statistics for data within a relational database, in particular a DB2 database, for selecting an access path to said data.

Eventually, the invention relates to a device for providing column statistics for data within a relational database, in particular a DB2 database, for selecting an access path to said data.

### BACKGROUND

Large databases are in general stored as relational databases, in particular a DB2 for OS/390 or Z/OS from International Business Machines (IBM). These relational databases may be queried using SQL queries. SQL queries are executed on the database and allow retrieving any data corresponding to the respective query statements.

Data within relational databases is mainly stored within tables, each table comprising a plurality of rows and columns. When accessing the data, it may happen that many different tables have to be scanned in order to retrieve the data sets, which match the respective SQL query statement. It is known that relational databases provide, as a central component, a tool called OPTIMIZER. This OPTIMIZER analyses the predicates of the SQL queries to determine an optimal and efficient access path to the tables. This access path may be established at compile or execution time of the database access.

For determining an efficient and optimal access path, DB2 OPTIMIZER uses data from the DB2 Catalog. Within this catalog, column statistics, such as cardinality of columns, are provided. The access path describes, for example, if the data should be accessed using an index or directly through the base table. The OPTIMIZER may use for its decision, for instance, the number of objects, e.g. number of entries in a table, the number of different column values for entries in a table (cardinality), the most frequent values of column entries (distribution), and the number of occurrences of certain values within a table (frequency).

For determination of these values, DB2 provides utilities called RUNSTATS, and DSTATS. These utilities determine the above-mentioned statistics. By providing this information, the OPTIMIZER may be able to determine a best strategy for efficient access path determination.

The RUNSTATS utility collects per default column statistics only for those columns, which are in an index of the base table. To collect column statistics for all objects within a DB2 database is a very time-consuming process and usually does not justify the cost.

In common applications, the RUNSTATS utility runs with default options, whereby columns statistics are only collected for the first column of an index.

The drawback of such methods is that the column statistics information is inaccurate, because depending on maintenance procedures carried out on the database, the statistics information might not be a representation of the real data. As the RUNSTATS utility only collects data for the first column in an index, statistics information is not complete and columns in certain predicates and joined conditions might not be included. In particular, for non-indexed columns, generally no column statistics are available.

Because of these drawbacks, the OPTIMIZER utility of the relational database has to make estimated guesses about the base data to find out the optimal access path. This results in applications running slowly because of inappropriate column statistics in the DB2 catalog.

In large DB2 environments, it is a very time-consuming process to execute RUNSTATS on all columns in all indexes. Executing RUNSTATS on columns without an index appears to be impossible in terms of time and costs.

It is also hard to decide, which column statistics are important for a DB2 OPTIMIZER improvement. Therefore, in most environments those options are not used at all. Furthermore, when these options are used, the decision which column statistics are important has to be carried out manually.

Manual determination of columns, which enhance the DB2 OPTIMIZER decision for determining the correct access path, is a tough process for the database administrator. On the other hand, collecting column statistics for all columns of all objects in a DB2 environment is almost impossible, because it will take too much time.

### SUMMARY OF THE INVENTION

To overcome these drawbacks, the invention proposes a method for providing column statistics for data within a relational database, in particular a DB2 database, in order to select an access path to said data, with the steps of collecting database queries to be executed on said database, parsing said database queries to create at least one usage matrix comprising at least usage information of certain statements within said database queries, determining from said usage matrix columns within said database for which said column statistics are useful, and collecting said column statistics for said determined columns.

Because of increasing performance requirements of DB2 applications, it is compellingly necessary to use column statistics for access path optimization. The inventive procedure works automatically, in order to determine suitable candidates for additional column statistics. The inventive method also keeps additional maintenance costs low. By providing the inventive method, the determination of suitable candidates is carried out by an intelligent trace evaluation.

Columns and column combinations without statistics, but specified in access conditions, which might profit from extended information, may automatically be detected. These columns may be indexed or non-indexed. In addition, compound statements and table joins may be determined, thereby identifying candidates, which might massively benefit from additional statistics.

By determining the suitable candidates, utility jobs may be generated, or made available to the existing maintenance procedures through an interface. Using these utility jobs, additional statistics may be determined within a normal maintenance window. The inventive method has the advantage that costs for determination of suitable column candidates and the respective statistics may be kept low, the information basis for an OPTIMIZER may be improved, the results from an OPTIMIZER may be improved in terms of performance, and the integration of the inventive method is trouble free.

In productive environments, many different database queries are included, which are executed on the database. With the inventive method, at least some of these database queries may be collected.

After collecting the database queries, such as SQL queries, the inventive method proposes to parse these queries. When parsing the statements, elements, which refer to columns, may be extracted. Thus, it is possible, to select queries, which might be useful candidates for further column statistics. The selected queries are used for creating at least one usage matrix comprising at least usage information of the respective statements within said collected queries. Within the usage matrix, certain statements may be stored together with the number of occurrences, which tables they refer to, together with which other statements they are used, when they are used, etc.

Said usage matrix may be used to determine the appropriate candidates, which might be suitable for further column statistics collection. This may be done by defining certain conditions a statement has to match to be a suitable candidate. These conditions might be found within the usage matrix.

After determining the suitable candidates from the usage matrix, the inventive method proposes to collect the respective columns statistics. This may be done by generating the appropriate utility jobs, which may then be passed to maintenance, RUNSTATS or DSTATS utilities of said database. It may also be possible to provide these jobs via interfaces, the appropriate utilities accessing them through said interfaces.

According to a preferred embodiment, it is proposed that said database queries are parsed to determine statements executed on joined tables. In such a case, queries are executed on at least two different tables. In SQL, such statements are in the syntax:

### FROM table A, table B.

This means that table A and table B are both used when carrying out the query. The search predicates relate to both tables and the matching data has to match with these predicates in both tables. In particular, highly skewed columns may not provide the best results in access path optimization. Access paths might be influenced not just by a single skewed predicate, but also by a combination of them. The multiplication rule means that the effect is cumulative, so that a relatively small degree of skew in a number of predicates could significantly skew the estimate, and therefore distort the access path. In particular, in joined tables, it is helpful to know the skew of the columns within each table to provide a better access path. As within skewed tables, for some predicates the frequency of certain values differ much, these frequency information may be used to determine the best possible access path. By providing distribution statistics for every predicate, or at least every significantly skewed predicate, the access path might be optimized.

According to a further embodiment, it is proposed that said database queries are parsed to determine compound statements. In particular, for compound statements, where two predicates are correlated to each other with the operator AND, column statistics might significantly improve access path optimization. The filtering effects of compound predicates might differ, in particular with respect to which predicates are correlated. In case of correlated predicates, which mostly appear together in a table, the filtering effect is low. On the other hand, in the case where compound predicates only appear seldom within one row of a table, the filter effect might be high.

It is also proposed that said database queries are parsed to determine compound statements executed on joined data sets comprising an AND statement in their WHERE clause. This syntax allows determining correlated compounds statements.

Queries, which could benefit from non-index frequency statistics, might be determined in case said queries are parsed to determine statements comprising one of the following syntax:
*columnname<operator>?,*
*columnname<operator>literal,*
*columnname<operator>columnname,*
*columnname<operator>:host variable.*

It is proposed that said usage matrix comprises information about tables, columns, occurrence rates, and/or page reads of the respective predicates. With this information, it may be possible to determine suitable candidates for column statistic generation.

In order to provide the OPTIMIZER with the least necessary data, it is proposed that availability of complete frequency statistics for first index columns is checked prior to step a) and in case of non-availability said complete frequency statistics are determined for respective first index columns. Only when frequency statistics for first index columns are available, an OPTIMIZER utility may provide a good access path. Therefore, it is checked whether such column statistics are available. In case column statistics for a first index column have not yet been generated, the generation tool may be initiated.

To determine which candidates are useful for column statistics and access path optimization, it is proposed that in step c) column statistics for columns, which are queried by said statements most frequently, are determined as useful. It is also proposed that column statistics for columns whose queries by said statements consume most processor time are determined as useful. To define which of the queries are used most frequently or consume most processor time, it is proposed that a threshold value of 80% is defined for determining the most frequently used and/or most processor consuming columns.

The least information, which is useful for determining suitable candidates, is the frequency statistics of a value for a predicate. Therefore, it is proposed that said column statistics comprise frequency statistics determining an occurrence frequency of a value within a column.

To determine useful candidates, it is proposed that said occurring frequency is analyzed on a per table, SQL, occurrence, and/or processor cost basis to determine which of said column statistics are useful.

A further aspect of the invention is a computer program product for providing column statistics for data within a relational database, in particular a DB2 database, for selecting an access path to said data, with a computer program stored thereon comprising instructions operable to cause a processor to collect database queries to be executed on said database, parse said database queries to create at least one usage matrix comprising at least usage information of certain statements within said database queries, determine from said usage matrix columns within said database for which said column statistics are useful, and determine said column statistics for said determined columns.

Yet another aspect of the invention is a device for providing column statistics for data within a relational database, in particular a DB2 database, for selecting an access path to said data, comprising storage means for storing at least one database, computing means for providing and executing database queries on said database, collection means for collecting database queries to be executed on said database, parsing means for parsing said database queries to create at least one usage matrix comprising at least usage information of certain statements within said database queries, determination means for determining from said usage matrix columns within said database for which said column statistics are useful, and retrieval means for determining said column statistics for said determined columns.

These and other aspects of the invention will be apparent from and elucidated with references to the following figures. In the figures show:

### BRIEF DESCRIPTION OF THE FIGURES

- Fig. 1: a CREWINFO table;
- Fig. 2: a BOOKINGS table;
- Fig. 3: collect index and non-index column frequency statistics;
- Fig. 4: collect correlated column frequency statistics;
- Fig. 5: collect all appropriate frequency statistics.

### DETAILED DESCRIPTION OF THE FIGURES

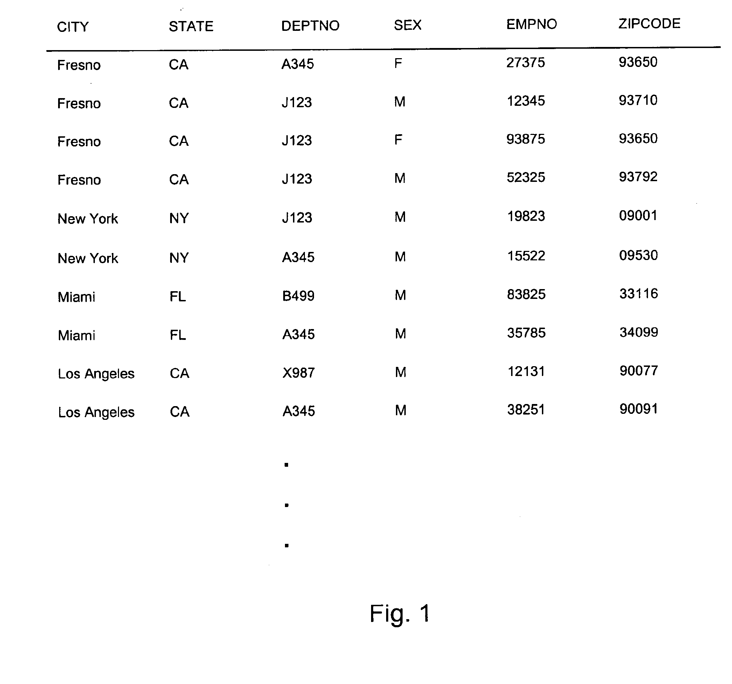

Fig. 1 depicts the first ten rows of a table comprising CREWINFO information. This table comprises the columns CITY, STATE, DEPTNO, SEX, EMPNO, ZIPCODE. The table comprises ca. 100.000.000 more rows, all comprising the value M in column SEX. The table CREWINFO has one index on column EMPNO.

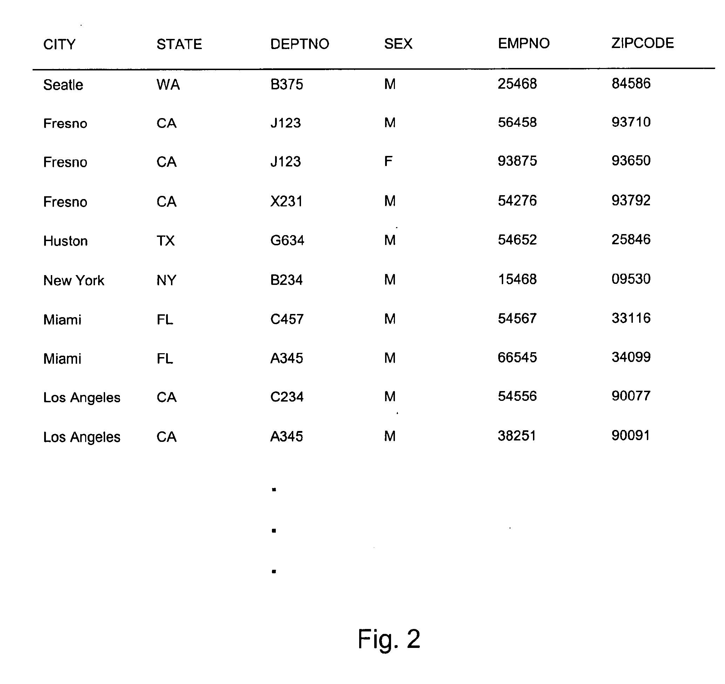

Figure 2 depicts a second table comprising BOOKINGS information. This table contains 100.000 rows of booking information. The first ten rows are depicted. The table BOOKINGS has one index on column EMPNO.

When considering the SQL query
SELECT...
FROM CREWINFO
, BOOKING
WHERE
CREWINFO.EMPNO = BOOKING.EMPNO (JOIN PREDICATE)
AND CREWINFO.SEX = 'F' (PREDICATE1)
two predicates are available, labeled JOIN PREDICATE and PREDICATE 1. When executing this query, the database must start with one of the tables depicted in figure 1 and figure 2. Depending on the selection of the access path, e.g. which of the tables is chosen first for the query, the number of rows to be checked in the respective other table differs enormously.

First, the case is considered where no frequency statistics for the column SEX is available. The statements, which have to be matched are JOIN PREDICATE and CREWINFO.SEX = "F". The number of matching columns is considered to be only 1. The estimate for a filter factor when starting with table bookings can be considered as 0.5, as the cardinality of values in column SEX is 2. With a filter factor of 0.5, the estimated number of rows being passed to table CREWINFO after table BOOKING has been checked is 50.000.000. The estimated number of rows passed to table CREWINFO, when table BOOKINGS has been checked first, is estimated to be 100.000. These assumptions base on cardinality information of the respective columns. Therefore, it is likely that table BOOKINGS is selected first for the access path.

Considering the filter factor only based on column cardinality results in starting from BOOKINGS. In the above case, more rows are estimated to be eliminated before the query is passed to table CREWINFO then vice versa. In fact, this assumption might prove as incorrect in case the column SEX is skewed and the actual frequency does not correspond to the column cardinality, as will be shown hereinafter.

In a second case, actual frequency values for column SEX exists. The filter factor based on column cardinality is 0.5. As the column SEX is highly skewed, the actual frequency of the value SEX = 'F' is 0.001. Therefore, the estimated number of rows based on filter factors passed to the next block from table CREWINFO is 1.000. The filter effect of PREDICATE 1 is much higher based on actual value frequency then expected based on column cardinality. The estimated number of rows passed through to next block from table BOOKINGS based on filter factors is 100.000. Therefore, the access path selected is to start from table CREWINFO. The collection of column statistics for column CREWINFO.SEX results in a better selection of an access path, as this column is highly skewed and the actual value frequency does not correspond to column cardinality.

In another example, where the query is:
SELECT...FROM CREWINFO WHERE
CITY = 'FRESNO' AND STATE = 'CA' (PREDICATE1)
AND DEPTNO = 'A345' AND SEX = 'F' (PREDICATE2).

Correlated columns (PREDICATE1: CITY, STATE; PREDICATE2: DEPTNO, SEX) might be selected and used for access path selection. The table used is the table depicted in figure 1. In the following example, this table is considered to comprise only ten values as depicted. The table CREWINFO has two indexes, one on CITY, STATE, and ZIPCODE and another on DEPTNO and SEX. The filter factors based on column cardinality for column CITY is 1/4 and for column STATE is 1/3. The compound filter factor for matching columns then results in 1/4 * 1/3 = 0,083. When choosing the first index on CITY, STATE and ZIPCODE, the qualified leaf pages based on DB2 estimations is 0,083 * 10= 0.83.

On the other hand, when choosing the index on DEPTNO and SEX, the filter factor based on column cardinality for DEPTNO is 1/4 and the filter factor based on column cardinality for columns SEX is 1/2. The compound filter factor for matching columns is therefore 1/4 * 1/2 = 0,125. As 0,125 is larger then 0,83, the first index is chosen as starting point for the access path.

However, the actual filter factor based on actual data distribution for the first index on CITY, STATE and ZIPCODE is 0,4, whereas the actual filter factor for the index based on DEPTNO and SEX is 0,2. As for the index based on CITY, STATE and ZIPCODE, CITY and STATE always correlate, which means that for instance CITY "FRESNO" is always in STATE "CA", this index has only little filter effects. On the other hand, the index on DEPTNO and SEX does a lot better job in filtering, as its filter effects are much higher. The actual number of qualified leaf pages based on compound predicates when starting with the first index is 4, whereas when starting with the second index it is 2. When choosing the second index, the access path should result in faster data retrieval.

The combined filtering of columns CITY and STATE seems very good, whereas the matching columns for the second index based on DEPTNO and SEX seem not to filter as much. Based on those calculations, DB2 chooses index 1 as an access. Since the columns CITY and STATE do almost no filtering, and the columns DEPTNO and SEX do a better job of filtering out rows, DB2 should favor index 2 over index 1. This selection is enabled by selecting this index and providing the appropriate statistics according to an inventive embodiment.

As can be seen from these two simple examples, the more information the OPTIMIZER has about actual frequency distribution, the better the chance of a good access path selection.

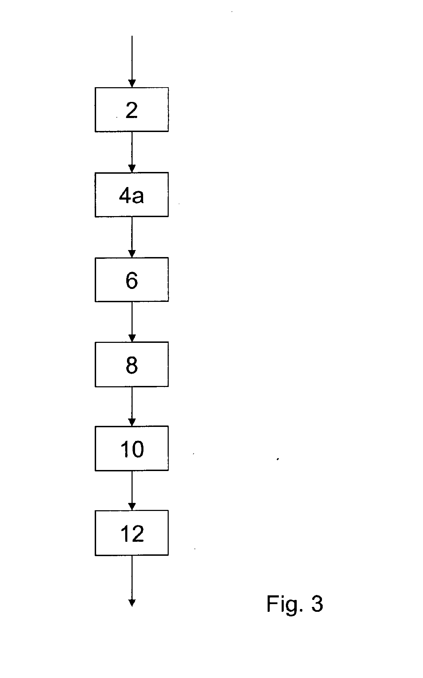

Fig. 3 depicts diagrammatically a flow diagram of an inventive method. In step 2, an SQL trace is run in a production environment to get a representative amount of SQL data.

This data will then be parsed to extract the information that is needed. Only statements where the syntax matches
*columnname <operator>: host variable, Parameter Marker or Literal*
*columnname<operator>columnname,*
is selected in step 4a.

In step 6, it is checked whether all first index columns have complete frequency statistics.

In step 8, a usage matrix of statements in terms of tables, columns, occurrence rates and page reads is created.

In step 10, the top 80% of SQL with respect to occurrence rates or processing time stored in the usage matrices are selected for the generation of frequency statistics. For the respective columns, the required jobs are generated and passed over to DB2 utility DSTATS or RUNSTATS.

In step 12 new REBINDS are generated, which means that the OPTIMIZER is started for any SQL packages that are affected, and new access paths are determined.

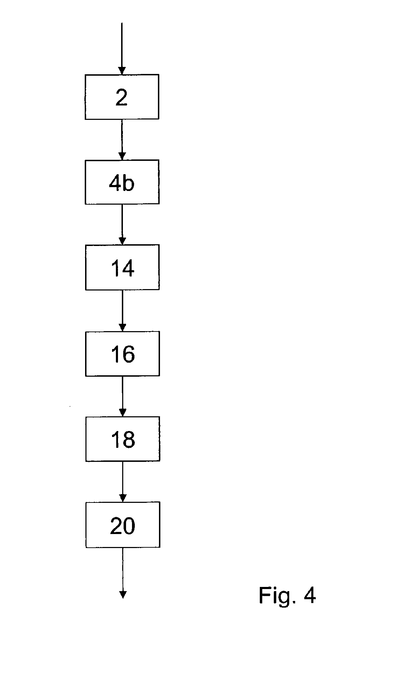

Fig. 4 depicts a method for selecting frequency statistics for compound statements. Compound statements may provide access to correlated columns. In step 2, again SQL data is retrieved. In step 4b, the SQL data is parsed. Only statements which comprise joins and having a syntax where more than one *columnname <operator> literal or columnname<operator>columnname* clauses are found, which are correlated with an AND statement in the WHERE clause are selected. In step 14, a usage matrix of said statements in terms of tables, columns, values, occurrence rates and page reads is built, which is analyzed in step 16 to determine suitable candidates for column statistics.

Further, if the column cardinality is close to the number of rows in the table then this column will be ignored from further processing because the filter factor is then already very low and grouping with another column will not bring any additional benefit.

For the candidates determined in step 16, the required jobs for generating frequency statistics are built and submitted in step 18. After the frequency statistics have been generated, in step 20 a REBIND is generated for all SQL packages that are affected, and a new access path is calculated.

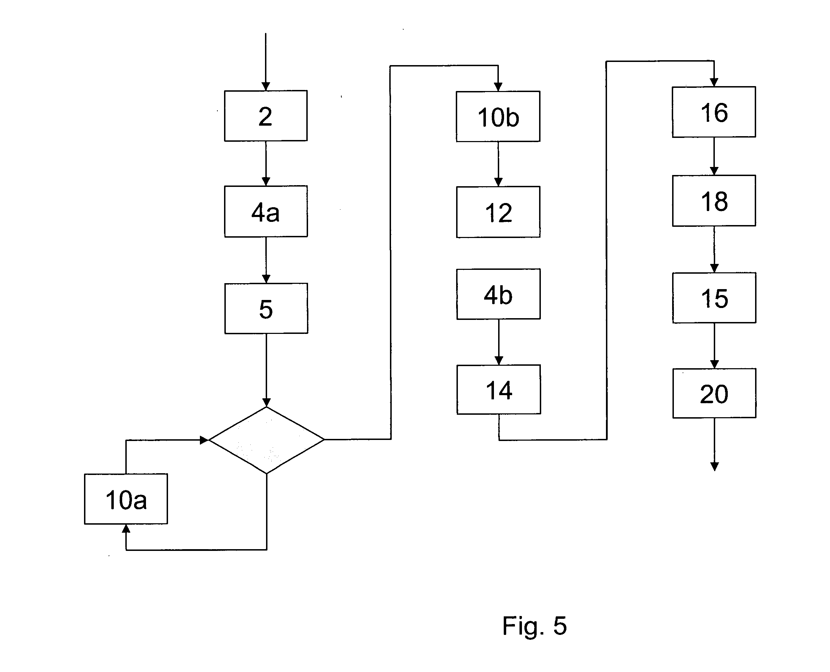

Fig. 5 depicts a method where index and non-index column frequencies and correlated column frequencies are generated. The same numerals refer to the same steps as in Fig. 3 and 4.

After in step 4a the candidates for index and non-index frequency statistics are selected, in step 5 these statements are explained for later comparison. In the next step, it is checked, whether any of the used indexes do not have first column frequency statistics. In such a case, in step 10a said frequency statistics are generated within a RUNSTATS or DSTATS operation.

After that, in step 10b all SQL are analyzed to determine, which of these statements could benefit from non-index frequencies statistics. These statements have a syntax as: *columnname <operator>?, columnname <operator>: literal, columnname<operator>columnname, or columnname <operator>: host variable.*

For this SQL, frequency statistics for the respective columns are generated using RUNSTATS or DSTATS in step 12.

In step 4b, SQL queries which contain correlated columns are determined.

In step 14, the frequency statistics for these correlated columns are generated and analysed on a per table, SQL, occurrence and cost basis in step 16.

For correlated columns, which might profit most from frequency statistics, RUNSTATS or DSTATS jobs are built in step 18.

In step 15, the respective SQL queries are explained and compared with the EXPLAIN output of step 5.

In step 20, the built RUNSTATS jobs may be simply executed or passed over to a utility generator. They might also be kept for the next time a, threshold value in access time has been reached.

The inventive method has the benefit that column frequency statistics for suitable candidates may be generated, and therefore the OPTIMIZER may choose a better access path. Suitable candidates may be selected automatically, and no manual selecting is necessary. The method fits into available maintenance tools and does not generate wasteful utilities.

## Claims

1. Method for providing column statistics for data within a relational database, in particular a DB2 database, in order to select an access path to said data, with the steps of:
a) collect database queries to be executed on said database,
b) parse said database queries to create at least one usage matrix comprising at least usage information of certain statements within said database queries,
c) determine from said usage matrix columns within said database for which said column statistics are useful, and
d) collect said column statistics for said determined columns.

2. The method of claim 1, wherein said database queries are parsed to determine statements executed on joined tables.

3. The method of any one of claims 1 to 2, wherein said database queries are parsed to determine compound statements.

4. The method of any one of claims 1 to 3, wherein said database queries are parsed to determine compound statements executed on joined tables comprising an AND statement in their WHERE clause.

5. The method of any one of claims 1 to 4, wherein said database queries are parsed to determine statements comprising one of the following syntax:
*columnname<operator>?,*
*columnname<operator>literal,*
*columnname<operator>columnname,*
*columnname<operator>:host variable.*

6. The method of any one of claims 1 to 5, wherein said usage matrix is created comprising information about tables, columns, occurrence rates, and/or page reads.

7. The method of any one of claims 1 to 6, wherein availability of complete frequency statistics for first index columns is checked prior to step a), and wherein in case of non-availability said complete frequency statistics are determined for respective first index columns.

8. The method of any one of claims 1 to 7, wherein in step c) column statistics for columns which are queried by said statements most frequently are determined as useful.

9. The method of any one of claims 1 to 8, wherein in step c) column statistics for columns whose queries by said statements consume most processor time are determined as useful.

10. The method of any one of claims 8 or 9, wherein a threshold value of 80% is defined for determining the most frequently queried and/or most processor consuming columns.

11. The method of any one of claims 1 to 10, wherein said column statistics comprise frequency statistics determining an occurrence frequency of a value within a column.

12. The method of any one of claims 1 to 11, wherein said occurrence frequency is analyzed on a per table, SQL, occurrence, and/or processor cost basis to determine which of said column statistics are useful.

13. A computer program for providing column statistics for data within a relational database, in particular a DB2 database, for selecting an access path to said data, comprising instructions operable to cause a processor to:
a) collect database queries to be executed on said database,
b) parse said database queries to create at least one usage matrix comprising at least usage information of certain statements within said database queries,
c) determine from said usage matrix columns within said database for which said column statistics are useful, and
d) determine said column statistics for said determined columns.

14. A computer program product for providing column statistics for data within a relational database, in particular a DB2 database, for selecting an access path to said data, with a computer program stored thereon comprising instructions operable to cause a processor to:
a) collect database queries to be executed on said database,
b) parse said database queries to create at least one usage matrix comprising at least usage information of certain statements within said database queries,
c) determine from said usage matrix columns within said database for which said column statistics are useful, and
d) determine said column statistics for said determined columns.

15. A device for providing column statistics for data within a relational database, in particular a DB2 database, for selecting an access path to said data, comprising:
storage means for storing at least one database, computing means for providing and executing database queries on said database,
collection means for collecting database queries to be executed on said database,
parsing means for parsing said database queries to create at least one usage matrix comprising at least usage information of certain statements within said database queries,
determination means for determining from said usage matrix columns within said database for which said column statistics are useful, and
retrieval means for determining said column statistics for said determined columns.
